# EUROPEAN PATENT APPLICATION

(11) **EP 3 984 796 A1**
(43) Date of publication of application: **20.04.2022**
(21) Application number: 21202704.9
(22) Date of filing: 14.10.2021
(51) Int. Cl.: B60H 3/00, F28G 9/00, B60H 3/06

(54) **AIR CONDITIONING PLANT**

(30) Priority: 14.10.2020 IT 202000024229
(71) Applicant: F.LLI Amadio S.p.A., 31028 Vazzola Treviso (IT)
(72) Inventor: AMADIO, Rito, 31028 VAZZOLA (IT); BIN, Alessio, 31028 VAZZOLA (IT)
(74) Representative: Lissandrini, Marco

(57) **Abstract**

An air conditioning plant comprises at least one aeration module (2), a filtering module and a sanitizing module (4). The aeration module (2) comprises in turn an adjusting device configured to modify at least one property of a flow of air to be dispensed inside an environment and at least one fan (2a) configured to diffuse such flow of air therein. The filtering module is instead configured to retain polluting agents present in the flow of air. The sanitizing module (4) is configured to dispense a sanitizing fluid, mixing it with the flow of air.

## Description

### TECHNICAL FIELD

The present invention relates to the technical sector of devices and processes for treating air, especially inside environments visited by people.

In particular, the present invention relates to an air conditioning and air treatment plant.

### PRIOR ART

Air conditioning plants are known which enable the air temperature inside an environment to be varied, to improve the well-being of the people who pass through or spend time inside, especially in the coldest or hottest periods of the year.

However, air conditioning plants, particularly those with internal air recirculation, aspirate and inevitably spread into the environment microorganisms (bacteria, viruses, fungi, etc....) and volatile organic compounds (VOCs) which are harmful to human health and which can be generically identified as polluting agents.

In fact, many studies have shown that the level of polluting agents that accumulates in closed spaces, especially of modest dimensions, can be equal to if not higher than that in the external environment.

Such substances can also originate, for example, from domestic objects of common and widespread use such as cleaning products and interior decorations.

Furthermore, the crowding of closed spaces can cause a high concentration of potentially dangerous microorganisms emitted by people through normal breathing.

To overcome the problems identified above, filters of various types and effectiveness are nearly always installed in plants, which enable the mechanical retention of some polluting agents to be implemented, removing them from the flow of air which is processed by the plant, thus reducing the concentration of microorganisms and VOCs.

However, the application of air filters does not appear to be very efficient as a non-negligible part of the polluting agents, bacteria and viruses has in particular too small dimensions to be retained by the filters, unless they are made with such fine meshes (e.g. HEPA filters) so as to significantly also hinder the passage of air inside the plant, thus compromising normal operation.

It is therefore clear that the advantages in terms of well-being brought about by the normal operation of air conditioning plants of the known type are counterbalanced by the worse overall quality of the air inside the environment that is air conditioned, a deterioration which can reach levels that can even be dangerous for human health.

There is therefore a need to make available new solutions which enable benefits to be obtained from the objective advantages presented by the installation of a plant for treating air, guaranteeing at the same time air that is as free as possible from polluting agents or however agents that are harmful to the environment and/or to human health.

### SUMMARY

In this context, the technical task underlying the present invention is to provide an air conditioning plant which obviates at least some of the drawbacks of the prior art as described above.

In particular, it is an object of the present invention to provide an air conditioning plant able to control one or more properties of the air present inside an environment, conditioning it and at the same time sanitizing it through the removal and elimination of polluting agents that are potentially harmful to human health.

The defined technical task and the specified aims are substantially achieved by an air conditioning plant comprising the technical characteristics set forth in one or more of the appended claims.

According to the present invention, an air conditioning plant is shown which comprises an aeration module, a filtering module and a sanitizing module.

The aeration module comprises in turn an adjusting device configured to modify at least one property of a flow of air to be delivered inside an environment and at least one fan configured to diffuse such flow of air therein.

The filtering module is instead configured to retain the polluting agents present in the air flow.

The sanitizing module is configured to dispense a sanitizing fluid, mixing it with the flow of air.

Advantageously, the air conditioning plant described herein enables both the processes of air conditioning and sanitizing of the air present inside an environment to be performed, guaranteeing both the comfort and health of the people located inside it.

The dependent claims, incorporated herein by reference, correspond to different embodiments of the invention.

### BRIEF DESCRIPTION OF THE DRAWINGS

Further characteristics and advantages of the present invention will become more apparent from the indicative and thus non-limiting description of a preferred, but not exclusive, embodiment of an air conditioning plant, as illustrated in the appended drawings, in which:
- figure 1 is an exploded view of the plant according to the present invention.
- figure 2 is an enlarged view of a constructive detail shown in figure 1.

### DETAILED DESCRIPTION

In the appended figures, the numerical reference 1 indicates in general an air conditioning plant, to which reference will be simply made as the plant 1.

Such plant 1 is adapted for the air conditioning of a flow of air to be introduced into environments visited by people.

For example, the invention can be particularly and effectively used in environments visited by high numbers of people such as businesses, offices or public places like schools, theatres and museums.

The plant 1 described herein can also be installed particularly advantageously on means of transport, in particular of the public sector, the use of which is inevitably connected with the transit of a high number of people, each of which represents a potential carrier of polluting substances such as bacteria and viruses, inside a closed environment, such as the cabin of a bus and/or a camper van and/or a ship and/or an aeroplane.

The term air conditioning means in the general sense any process and operation intended to make the air inside the environment more agreeable, pleasant and safe and can comprise for example any process and operation through which one or more properties are modified.

By way of non-limiting example the properties of the air that can be influenced by the operation of the plant can comprise at least one from among: air temperature, degree of humidity of the air, bacterial load, concentration of at least one chemical compound, in particular a polluting chemical compound (or for the purposes of the present description any chemical compound that is potentially hazardous for human health).

The plant 1 comprises at least one aeration module 2, a filtering module and a sanitizing module 4.

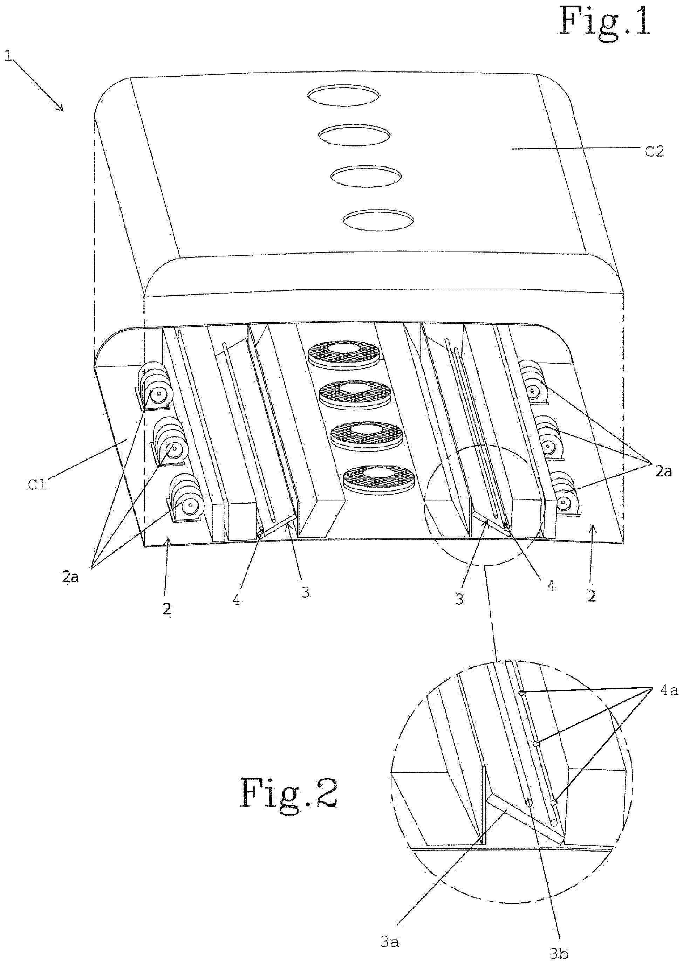

As shown in figure 1, the various components that constitute the plant 1 can be installed inside a containment body made for example by means of a base C1 on which the modules 2, 4 and any further components are mounted and a covering element C2 which enables the plant 1 and the components thereof to be protected.

The above does not exclude the fact that any components of the plant 1 or individual parts thereof can instead be installed outside (locally or in remote mode) with respect to the containment body.

In more detail, the aeration module 2 is configured to promote the generation and dispensing inside the environment to be air conditioned of a flow of air having specific characteristics and properties determined according to the modalities that will be explored in more detail below.

The aeration module 2 comprises an adjusting device configured to modify at least one property of a flow of air, in particular at least one of the properties listed above.

For example, the adjusting device can comprise one or two heat regulating devices made by means of two finned batteries having a high exchange surface and in which a refrigerant or heat transfer fluid flows. In particular, the refrigerant battery (evaporator) is coupled to a lamination member supplied by a compressor configured to compress the refrigerant fluid.

Alternatively, or additionally, the refrigerant battery may be coupled to a heating battery supplied with a heat transfer fluid or of the electric type.

The aeration module 2 further comprises at least one fan 2a configured to diffuse the flow of air inside the environment to be air conditioned.

Therefore, in use, the adjusting device varies the at least one property of a flow of air and the at least one fan 2a promotes the emission of such a conditioned flow of air in the environment for conditioning the latter.

To prevent the flow of air that is introduced into the environment, therefore to which the people present inside are exposed, containing or having any polluting agents that could be dangerous to their health, the plant 1 is further configured to perform a filtering thereof.

Such operation is performed through the filtering module, not explicitly illustrated in the appended figures, which is arranged at the aeration module 2, so as to remove at least the large polluting agents (e.g. dust) which are transported by the flow of air which is processed.

In detail, the filtering module is configured to perform a mechanical retention of the polluting agents present in the air.

Therefore, the filtering module enables a first removal of polluting agents to be performed, improving the overall quality of the flow of air that is dispensed through the plant 1 into the environment and therefore of the air that is breathed by the people present inside it.

The removal of all the polluting agents that are not retained by the filtering module is performed by the plant 1 through the action of the sanitizing module 4.

In particular, the sanitizing module 4 is configured to dispense a sanitizing fluid and to mix it with the flow of air that crosses and is dispensed by the plant 1 under the action of the aeration module 2.

The expression sanitizing fluid is intended to mean any fluid able to exert an antibacterial and/or disinfectant action able to eliminate and remove or however neutralize a polluting agent present in the flow of air.

In other words, the sanitizing module 4 is able to dispense into the flow of air which crosses the plant 1 a substance that promotes the elimination of polluting agents present inside it therefrom, so as to enable the overall quality of the air present inside the environment to be air conditioned to be improved and the safety of the people that occupy it to be guaranteed.

In more detail, the sanitizing module 4 comprises a supply line of the sanitizing fluid which has one or more nozzles 4a each of which is configured to dispense the sanitizing fluid.

The ventilation activates and the recirculation of the air saturated with sanitizing solution enables the sanitization of the surfaces of the plant 1 downstream of the nozzles 4a, of the delivery channels, of the passenger compartment if the environment to be conditioned is a vehicle, and finally of the suction grille and the air filters of the plant 1.

Preferably, the sanitizing module 4 is installed in the plant 1 upstream of the aeration module 2 with respect to the advancement direction of the flow of air inside the plant 1 itself, so as to mix the sanitizing fluid with the flow of air before the latter reaches the aeration module 2.

Preferably, in this context, the supply line comprises one or more nozzles 4a directly facing the aeration module 2, so as to enable the latter to be sanitized too through the action of the sanitizing fluid.

In this way, the sanitizing fluid also crosses the aeration device 2, enabling it to be disinfected and sanitized.

Furthermore, the sanitizing module 4 comprises a tank inside which the sanitizing fluid can be stored and which is connected, i.e. in fluid communication, with the supply line.

Alternatively, the supply line is connectable to an outer tank.

Alternatively, the sanitizing module 4 comprises an inner tank connected to the supply line and the latter is also connectable to an outer tank, thus also making it possible to supply separate sanitizing fluids.

In general, the supply line can be configured to supply to all the nozzles 4a the same sanitizing fluid received by a single tank or obtained by mixing various distinct fluids received by distinct tanks, or to supply different sanitizing fluids received from distinct tanks or groups of tanks to distinct groups of nozzles 4a.

According to a preferred embodiment, the plant 1 further comprises a photocatalytic module 3 configured to break down the polluting agents present in the flow of air.

In this text, the term "photocatalysis" refers to a catalytic method applied to photochemical reactions which is based on the use of a photocatalyst that can be activated through electromagnetic radiation of appropriate energy.

In detail, the photocatalytic module 3 is configured to be hit and/or to convey the flow of air and comprises a support frame 3a on which a photocatalytic coating is applied and at least one lighting device 3b associated and coupled with the support frame 3a, so as to illuminate it to promote the establishment of photocatalysis reactions of the coating applied thereto, which contribute to the elimination of the polluting agents.

In detail, the support frame 3a has a honeycomb structure adapted to define a plurality of conduits parallel to one another through which the flow of air can pass and be conveyed.

Preferably, the support frame 3a is made of metal material, even more preferably aluminium, or an alloy thereof, so as to define an inert and very resistant support, thus guaranteeing long lifetimes for the plants 1 in which it is used.

As mentioned above, on the support frame 3a a photocatalytic coating is applied, i.e. a coating having a chemical composition adapted to catalyse the establishment of a photochemical reaction when radiated with light of an appropriate wavelength.

Preferably, the photocatalytic support has a chemical composition which comprises titanium dioxide, although it is possible to select compositions having different chemical compounds however able to catalyse the establishment of photocatalysis reactions.

The potential choice of titanium dioxide comes from its particular predisposition to perform photocatalytic oxidation by generating reactive oxygen species (ROS) such as O₂- (superoxide anion), ·OH (hydroxyl) and H₂O₂ (hydrogen peroxide), able to destroy and decompose bacteria, viruses and fungi.

The activation of the photocatalytic properties of titanium dioxide takes place in particular when the latter is radiated by a light source having a wavelength in the ultraviolet range.

Therefore, in this context the lighting device 3b comprises a light source able to emit a light signal having a component which has a wavelength comprised in the ultraviolet range, preferably comprised in the ultraviolet C range (UV-C).

Advantageously, the UV-C rays have a disintegrating effect on the DNA of the cells of the microorganisms present in the air and on the directly radiated surfaces.

In this way, the lighting device 3b not only activates the photocatalytic properties of the photocatalytic coating, but also enables it to be maintained in optimal operating conditions as it promotes the elimination and removal of the microorganisms that can be deposited thereon during the passage therein of the flow of air.

Therefore, the photocatalytic module 3 supports the purification action of the air performed by the various components that constitute the plant, performing an efficient, accurate and safe removal of the polluting agents present in the flow of air.

Alternatively or additionally to the photovoltaic module 3, the plant 1 can comprise a photovoltaic module (not shown in the appended figures) comprising a respective lighting device.

It is underlined that the aforementioned photolytic module can resort to the use of photolysis (or photodecomposition) for decomposing the polluting agents present in the flow of air. In particular, the term "photolysis" means herein a reaction in which a compound undergoes splitting through the absorption of electromagnetic radiation of appropriate energy, generally radiation in the UV spectrum.

In other words, the photolytic module can enable the decomposition of the polluting agents present in the flow of air without necessarily requiring the presence of a catalyst.

In general, the plant 1 can comprise various copies of the same module 2, 3, 4 (i.e. the aeration, photocatalytic and/or photolytic and sanitizing module, respectively) as shown by way of example in the appended figures which illustrate a plant 1 comprising, in particular, two photocatalytic modules 3 and two sanitizing modules 4.

Independently from the number thereof, the operation and operating management of the individual modules 2, 3 and 4 and/or of the photolytic module during the activation of the plant 1 are performed through a control unit which is connected to the plant, in particular directly to the individual modules 2, 3, 4.

In more detail, the control unit is configured to selectively activate and to modify at least one operating parameter of each module 2, 3, 4 and/or of the photolytic module of the plant 1.

In other words, through the control unit it is possible to manage the activation of the modules 2, 3, 4 and/or of the photolytic module and select which parameters are activated and perform the operations for which they are configured.

According to such aspect, the control unit comprises a legible storage medium on which a plurality of preset programs are stored.

Each preset program comprises a predetermined combination of operating parameters for at least one module 2, 3, 4 and/or for the photolytic module.

Preferably, the preset programs can be modified by a user so as to set and/or modify one or more parameters or activation modes of the individual modules 2, 3, 4 and/or of the photolytic module or of the plant 1 in general to adapt them to the user's specific needs.

Furthermore, the control unit is connected to or connectable to a remote terminal configured to generate command signals of the control unit in order to activate and/or modify at least one operating parameter of at least one module 2, 3, 4 and/or of the photovoltaic module of the plant 1.

In other words, the plant 1 can comprise a remote terminal, for example a remote control, with which it is possible to control the control unit and therefore the operation of the plant 1 itself.

Alternatively, the control unit can be connected to a remote terminal through a wireless connection, e.g. via Wi-Fi^{®}, Bluetooth^{®} protocols or through a mobile telecommunication network.

The remote terminal can be for example a smartphone, a tablet, a computer or however an electronic device able to be interfaced with the control unit for the transceiving of the command signals.

It is further observed that in general terms the photocatalytic 3 and sanitizing 4 modules can be realized by distinct components from the basic structure of the plant 1 and coupled thereto also at a moment subsequent to the production of such plant 1.

In other words, according to the spirit of the present invention, a kit is also presented for the upgrading of an air conditioning plant 1 which comprises a sanitizing module 4 configured to be installed in an air conditioning plant 1 and having one or more of the structural and functional characteristics described above.

In particular, the kit comprises a sanitizing module 4 configured to dispense a sanitizing fluid and to mix it with a flow of air processed by the air conditioning plant 1 on which it is installed.

The kit can also further comprise the photocatalytic module 3 and/or the photolytic module configured to be installed in an air conditioning plant 1 and having one or more of the structural and functional characteristics described above.

According to what has been previously described, the kit can further comprise a filtering module configured to retain polluting agents present in the air flow, said filtering module being operatively positioned upstream of said sanitizing, photocatalytic and/or photovoltaic modules.

Such kit advantageously enables a rapid and efficient upgrading of the pre-existing air conditioning plants to be performed without requiring the full replacement thereof.

From an operating point of view the activation of the modules 2, 3, 4 and/or of the photolytic module installed in the plant 1 described herein enables a series of operations and steps to be performed which define overall an air conditioning method able to modify one or more properties of the air present inside an environment.

Such method can comprise an air conditioning step which is performed by modifying at least one property of a flow of air and by diffusing such flow of air inside the environment to be air conditioned.

In particular, the air conditioning step can be performed by activating the aeration module 2.

The method can comprise a filtering step, preferably performed before the air conditioning step, in which the flow of air is filtered enabling part of the dust that is part of the polluting agents present in the flow of air to be retained, hence improving the quality thereof.

This filtering step is preparatory to the maintenance over time of the cleaning and efficiency of the photocatalytic module 3, delaying the dirtying of the photocatalytic module 3 itself and the aeration module 2 with dust and can be performed by means of the filtering module.

Additionally, the method envisages the performance of a photocatalytic step in which a photocatalytic process is established which can break down the concentration of microorganisms and polluting agents, which can be for example performed by activating the photocatalytic module 3.

Alternatively or additionally to the photocatalysis step, the method can comprise a photolysis (or photodecomposition) step in order to decompose the polluting agents present in the flow of air. In particular, the photolysis step can envisage the decomposition of the polluting agents present in the flow of air through the use of a photolytic module.

Preferably, such step of decomposing polluting agents through the use of a photolytic module comprises the sub-step of radiating the flow of air through a lighting device.

Even more preferably, such lighting device may be a lighting device operating in the ultraviolet range.

The method further comprises a sanitizing step which is performed by dispensing a sanitizing fluid and mixing it with the flow of air that crosses the plant 1.

Advantageously, the method can comprise a step of dispensing the sanitizing fluid intermittently according to a plurality of operating parameters.

In this way, the method enables the dispensing of the sanitizing fluid to be adapted, in order to optimize the sanitizing action of the sanitizing step.

For example, such operating parameters can comprise the dimensions and/or volume and/or conformation of the environment to be sanitized and/or of the plant 1 itself. For example, in the case in which the environment to be sanitized is the cab or passenger compartment of a vehicle, e.g. a coach or a railway wagon, one of the operating parameters is preferably the volume. Furthermore, such parameters can comprise the temperature and/or humidity present inside the environment to be sanitized.

In particular, the air sanitizing step can be performed by activating the sanitizing module 4.

Preferably, the sanitizing step is performed when there are no people inside the environment.

In other words, during use in an environment in which there are people, the plant 1 is activated so as to only perform the filtering, photocatalysis and air conditioning steps, therefore only activating the aeration module 2, the filtering module and the photocatalysis module 3 (or any possible combination of such three modules 2, 3), whereas the sanitizing module 4 remains inactive.

When instead there are no people inside the environment it is possible to activate the sanitizing module 4 performing the simultaneous sanitizing step.

The activation of the sanitizing module 4 alone enables the sanitizing of the components comprising the plant to be performed, as the sanitizing fluid is dispensed onto them.

The simultaneous activation of the sanitizing module 4 and of the aeration module 2 also enables the sanitizing of the environment to be air conditioned, as it promotes the diffusion of the sanitizing fluid (which has been mixed with the flow of air) inside such an environment.

Advantageously the activation of the aeration 2, photocatalytic 3 and sanitizing 4 modules and the performance of the various steps identified above can be performed remotely by a terminal operatively associated with a control unit of the plant 1.

Advantageously, furthermore, various plants 1 can be connected and therefore controlled by a same remote terminal.

Such an aspect is particularly advantageous for applications in the public transport sector where it is for example possible to simultaneously control the air conditioning plants 1 of all the vehicles that are located in a depot for performing the sanitization thereof quickly without the intervention of an operator being necessary on every individual vehicle.

The present invention advantageously achieves the proposed objects, obviating the drawbacks complained of in the prior art.

In particular, the present invention provides the user with an air conditioning plant 1 able to simultaneously guarantee the health and comfort of people using the air conditioned environment, further enabling the sanitizing operations of the environment to be performed quickly.

## Claims

1. An air conditioning plant (1) comprising:
- an aeration module (2) comprising an adjusting device configured to modify at least one property of a flow of air and at least one fan (2a) configured to diffuse said flow of air in an environment;
- a filtering module configured to retain polluting agents present in the air flow;
- a sanitizing module (4) configured to dispense a sanitizing fluid and to mix said sanitizing fluid with the flow of air;
- at least one from:
a) a photocatalytic module (3) configured to break down polluting agents present in the flow of air and comprising: a support frame (3a), preferably made of metal material; a photocatalytic coating deposited on said frame, preferably said photocatalytic coating having a chemical composition comprising titanium dioxide; and at least one lighting device (3b), preferably a lighting device (3b) operating in the ultraviolet range, facing said support frame (3a) and configured to activate the photocatalytic coating; and
b) a photolytic module comprising a lighting device, preferably operating in the ultraviolet range;
and furthermore,
- a control unit configured to selectively activate and to modify at least one operating parameter of each module (2, 3, 4) of the air conditioning plant (1) as a function of one or more selectable operating conditions.

2. The plant (1) according to claim 1, wherein the sanitizing module (4) comprises a supply line of the sanitizing fluid having one or more nozzles (4a) for dispensing said sanitizing fluid.

3. The plant (1) according to claim 2, wherein at least one nozzle (4a) directly faces the aeration module (2) so as to dispense the sanitizing fluid by mixing it to the flow of air upstream of said aeration module (2) with respect to an advancement direction of the flow of air inside the air conditioning plant (1).

4. The plant (1) according to claim 2 or 3, wherein the sanitizing module (4) comprises a tank that is adapted to contain the sanitizing fluid connected to the supply line and/or the supply line is connectable to an outer tank.

5. The plant (1) according to one or more of the preceding claims, wherein the support frame has a honeycomb structure.

6. The plant (1) according to one or more of the preceding claims, wherein the control unit comprises a readable storage medium that is adapted to store a plurality of preset programs, each preset program comprising a pre-determined combination of operating parameters for at least one module (2, 3, 4), preferably said plurality of preset programs being modifiable by a user.

7. The plant (1) according to one or more of the preceding claims, wherein the control unit is connected or connectable with a remote terminal that is configurable to generate command signals of the control unit in order to activate and/or modify at least one operating parameter of at least one module (2, 3, 4) of the air conditioning plant (1).

8. A kit for upgrading an air conditioning plant (1), comprising:
- a sanitizing module (4) configured to dispense a sanitizing fluid and to mix said sanitizing fluid with a flow of air processed by the air conditioning plant (1), said sanitizing module comprising a supply line of the sanitizing fluid having one or more nozzles (4a) for dispensing said sanitizing fluid, said sanitizing module (4) further comprising a tank that is adapted to contain the sanitizing fluid connected to the supply line and/or said supply line being connectable to an outer tank;
- at least one from:
a) a photocatalytic module (3) configured to break down polluting agents present in the flow of air and comprising: a support frame (3a), preferably made of metal material; a photocatalytic coating deposited on said frame, preferably said photocatalytic coating having a chemical composition comprising titanium dioxide; and at least one lighting device (3b), preferably a lighting device (3b) operating in the ultraviolet range, facing said support frame (3a) and configured to activate the photocatalytic coating; and
b) a photolytic module comprising a lighting device, preferably operating in the ultraviolet range;
and furthermore,
- a control unit configured to selectively activate and to modify at least one operating parameter of each module (3, 4) as a function of one or more operating conditions of the air conditioning plant (1).

9. The kit according to claim 8, further comprising a filtering module configured to retain polluting agents present in the air flow, said filtering module being operatively positioned upstream of said sanitizing, photocatalytic and/or photovoltaic modules.

10. A method for sanitizing a flow of air in an air conditioning plant (1) that is suitable for modifying at least one property of a flow of air and diffusing this flow of air inside an environment to be air-conditioned, said method comprising the steps of:
- filtering said flow of air to retain polluting agents;
- dispensing a sanitizing fluid, mixing it with the flow of air;
- at least one from among the following steps:
- breaking down polluting agents present in the flow of air by a photocatalytic module (3), said step of breaking down polluting agents comprising the sub-step of radiating a photocatalytic coating deposited on a support frame (3a) by a lighting device (3b), preferably a lighting device (3b) operating in the ultraviolet range, arranged in a position facing said support frame (3a); and
- breaking down polluting agents present in the flow of air by a photolytic module comprising the sub-step of radiating the flow of air by a lighting device, preferably a lighting device operating in the ultraviolet range;
and furthermore,
- selectively performing at least one of the aforesaid steps as a function of one or more operating conditions of the air conditioning plant (1).

11. The method according to claim 10, comprising the step of dispensing the sanitizing fluid intermittently according to a plurality of operating parameters.

12. The method according to claim 10 or 11, comprising the step of providing an air conditioning plant (1) according to any one of claims 1 to 7 and/or an upgrading kit according to claim 8 or 9, wherein said filtering, dispensing and decomposition steps via photocatalysis and/or photolysis are performed through said plant or said kit.
